# EUROPÄISCHE PATENTSCHRIFT

(11) **EP 2 979 345 B1**
(45) Veröffentlichungstag und Bekanntmachung des Hinweises auf die Patenterteilung: **21.07.2021**
(21) Anmeldenummer: 14708044.4
(22) Anmeldetag: 06.03.2014
(51) Int. Cl.: H02K 1/17, H02K 23/04

(54) **MAGNETHALTEFEDER, SOWIE ELEKTRISCHE MASCHINE BEINHALTEND EINE SOLCHE, SOWIE VERFAHREN ZUM HERSTELLEN DER ELEKTRISCHEN MASCHINE**
MAGNET-RETAINING SPRING, ELECTRIC MACHINE CONTAINING SUCH A MAGNET-RETAINING SPRING, AND METHOD FOR PRODUCING THE ELECTRIC MACHINE
RESSORT DE RETENUE MAGNÉTIQUE AINSI QUE MACHINE ÉLECTRIQUE CONTENANT UN TEL RESSORT AINSI QUE PROCÉDÉ DE FABRICATION DE LA MACHINE ÉLECTRIQUE

(30) Priorität: 28.03.2013 DE 102013205652
(43) Veröffentlichungstag der Anmeldung: 03.02.2016
(73) Patentinhaber: Robert Bosch GmbH, 70442 Stuttgart (DE)
(72) Erfinder: MILI, Tarek, F-67630 Lauterbourg (FR)
(86) Internationale Anmeldenummer: PCT/EP2014/054321
(87) Internationale Veröffentlichungsnummer: WO 2014/154460

(56) Entgegenhaltungen:
- EP-A1- 0 782 238
- EP-A2- 0 334 662
- WO-A1-2008/092523
- DE-A1- 2 639 779
- DE-A1-102009 033 623
- DE-U1-202012 012 483
- FR-A- 1 559 701
- US-A- 4 636 107

## Beschreibung

### Stand der Technik

Die Erfindung geht aus von einer Magnethaltefeder, sowie eine elektrische Maschine beinhaltend eine solche, sowie einem Verfahren zum Herstellen der elektrischen Maschine nach der Gattung der unabhängigen Ansprüche.

Mit der US 4,372,035 ist ein Elektromotor bekannt geworden, bei dem in einem Polgehäuse zwei gegenüberliegende Permanentmagnete und zwischen diesen zwei so genannte Folgepole angeordnet sind. Zur Ausbildung der Folgepole ist in der Polgehäusewand eine Kontur ausgeformt, deren bogenförmige Innenfläche den gleichen Abstand zum Rotor hat, wie die schalenförmigen Permanentmagnete. Zur Befestigung von Permanentmagneten im Polgehäuse sind Magnethaltefedern bekannt, die mittels einer Federkraft die Permanentmagnete gegen die Gehäusewand pressen um diese zu befestigen. Die DE 102007004873 A1 zeigt beispielsweise eine solche Magnethaltefeder, bei der an den beiden Längsschenkeln zu deren Stabilisierung Wellen ausgeformt sind. Der Bügel zwischen den beiden Längsschenkeln ist eben ausgebildet und in der gleichen Ebene wie die beiden Schenkel angeordnet. Will man solch eine Magnethaltefeder für den oben beschriebenen Folgepolmotor verwenden, besteht die Gefahr, dass die Magnethaltefeder im Bereich der Folgepolkontur radial nach innen gegen den Rotor kippt und diesen berührt. Dies kann zur Zerstörung des Elektromotors führen.

Mit der DE 20 2012 012483 A1 ist ein Elektromotor bekannt geworden, bei dem in einem Polgehäuse zwei gegenüberliegende Permanentmagnete und zwischen diesen zwei so genannte Folgepole angeordnet sind. Zur Ausbildung der Folgepole ist in der Polgehäusewand eine Kontur radial nach innen ausgeformt, so dass die Permanentmagnete formschlüssig in Umfangsrichtung an der Kontur anliegen. Die Permanentmagnete werden dabei an die Polgehäusewand angeklebt.

Die DE 26 39 779 A1 zeigt eine Magnethaltefeder, die radial außerhalb des Motorgehäuses an diesem mittels eines Bügels befestigt ist. Dabei greifen zwei Enden der Magnethaltefeder radial durch Löcher in der Gehäusewand hindurch und pressen einen Permanentmagneten federnd radial nach außen gegen die Gehäusewand.

In der EP 0 782 238 A1 ist eine Magnethaltefeder gezeigt, die mit einem flächig ausgebildeten Bügel radial an der Innenwand des Polgehäuses anliegt. An den beiden umfangsseitig gegenüberliegenden Seiten sind an dem Bügel radiale Fortsätze angeformt, die die beiden benachbarten Permanentmagneten jeweils an ihrer radialen Innenseite federnd umgreifen.

### Offenbarung der Erfindung

### Vorteile der Erfindung

Die erfindungsgemäße elektrische Maschine beinhaltend eine Magnethaltefeder, sowie das erfindungsgemäße Verfahren zum Herstellen einer solchen Maschine mit den Merkmalen der unabhängigen Ansprüche haben demgegenüber den Vorteil, dass durch die Ausgestaltung der Magnethaltefeder, insbesondere deren Bügel, verhindert wird, dass die Magnethaltefeder radial nach innen kippt. Dies wird dadurch erreicht, dass der Bügel nicht in der gleichen Ebene angeordnet ist, die durch die beiden näherungsweise geraden Schenkel gebildet wird. Der Bügel weist zumindest Raum-Komponenten auf, die bezüglich dieser Ebene quer ausgebildet sind. Durch diese 3-dimensionale Ausgestaltung der Magnethaltefeder liegen die Schenkel sicher an den Permanentmagneten an, ohne dass Gefahr besteht, dass die Magnethaltefeder den Rotor berührt.

Durch die in den abhängigen Ansprüchen aufgeführten Maßnahmen sind vorteilhafte Weiterbildungen und Verbesserungen der in den unabhängigen Ansprüchen angegebenen Merkmale möglich. Besonders vorteilhaft ist es, wenn der Verbindungsbereich zwischen den beiden Schenkeln gebogen ausgebildet ist. Im montierten Zustand verläuft dieser Verbindungsbereich dann ausgehend von den beiden am Permanentmagneten anliegenden geraden Schenkeln von der Gehäusewand - zumindest teilweise - bogenförmig durch den Innenraum des Gehäuses. In einer bevorzugten Ausführung weist dabei der Bügel insbesondere keine geraden Abschnitte auf, sondern ist über seine gesamte LängsErstreckung gewölbt ausgebildet - wobei vorzugsweise sich der Biegeradius über die Längserstreckung veränderlich ausgebildet ist.

Der Bügel, der die beiden näherungsweise geraden Schenkel miteinander verbindet, kann auch einen gerade ausgebildeten Abschnitt aufweisen, der dann vorzugsweise etwa parallel zu der Ebene verläuft, die durch die beiden Schenkel aufgespannt wird, wobei der gerade Abschnitt zu dieser Ebene einen gewissen Abstand aufweist. Dabei weist der Bügel auch zwei weitere Übergangsabschnitte auf, die dann von dem geraden Abschnitt mehr oder weniger gebogen zu den beiden Schenkeln führen.

Wird die Erstreckungsrichtung des Bügels über seine gesamte LängsErstreckung jeweils in zwei Komponenten zerlegt (im mathematischen Sinne), die sich in der Ebene, die die Schenkel aufspannen und einer dazu senkrechten Richtung erstrecken, so weist der Bügel immer zumindest einen Abschnitt auf, in dem die Richtungskomponent senkrecht zu der Schenkelebene von Null unterschiedlich ist.

Die Magnethaltefeder ist erfindungsgemäß besonders kostengünstig aus einem Metalldraht als Drahtbiegeteil hergestellt, bei dem ein einstückiger Draht mit einem runden oder eckigen Querschnitt in ein 3-dimensionales Gebilde umgebogen wird. Durch die Verwendung von Federstahl wird die Magnethaltefeder bei deren Einbau elastisch verformt, so dass diese eine Federkraft auf die Permanentmagneten ausübt.

Bevorzugt wird die Magnethaltefeder so gefertigt, dass die beiden Schenkel vor dem Einbau einen Winkel zueinander bilden, der beispielsweise 10° bis 35° beträgt. Bei dem Einbau wird die Magnethaltefeder dann so verformt, dass die beiden Schenkel näherungsweise parallel verlaufen. Da die Schenkel gerade ausgebildet sind, findet die Verformung beim Einbau im Bereich des Bügels, bzw. in den Übergangsbereichen von dem Bügel zu den Schenkeln statt.

Um die Permanentmagnete besonders einfach im Polgehäuse der elektrischen Maschine zu fixieren, werden diese erfindungsgemäß mittels Magnethaltefedern gegen die Innenwand gedrückt. Dabei liegen die freien Enden der U-förmigen Feder an in Umfangsrichtung weisende Seitenflächen der Permanentmagnete an. Durch die Spannkraft, die mittels der Magnethaltefeder zwischen den beiden Permanentmagneten ausgeübt wird, werden diese sowohl radial als insbesondere auch axial im Gehäuse fixiert. Zur besseren Anlage der freien Schenkel an den Seitenflächen können die Schenkel oder an den Seitenflächen eine strukturierte Oberfläche aufweisen. Die Permanentmagnete können eine - insbesondere kontinuierliche - Polabhebung oder zweier unterschiedliche diskrete Innenradien aufweisen, wodurch die Seitenfläche einen größeren Abstand zum Rotor aufweist. Die Seitenfläche ist radial oder schräg zur Radialrichtung ausgebildet und weist vorzugsweise am Außenumfang eine Fase auf. Es kann beispielsweise Ferritmaterial für die Magnete verwendet werden, oder alternativ auch Seltenen Erden Magnetmaterialien.

Die Folgepole werden erfindungsgemäß besonders günstig durch das Anformen jeweils zweier in Axialrichtung verlaufender Sicken in der Polgehäusewand realisiert. In Umfangsrichtung wird dadurch eine gewölbte Innenkontur gebildet, die magnetisch mit dem Rotor zusammenwirkt. Diese Sicken bilden bezüglich der Umfangsrichtung die Ränder des Folgepols und bilden gleichzeitig die Begrenzung für den Haltebereich der Permanentmagnete. Da die Folgepole und die Permanentmagnete näherungsweise den gleichen Innendurchmesser aufweisen, sind die Schenkel zwischen den Sicken und den Seitenflächen der Magnete angeordnet.

Dazu ist zwischen den Sicken der Folgepolkontur und den Seitenflächen der Permanentmagnete ein Hohlraum oder Spalt ausgebildet, in den die freien Schenkel über die gesamte axiale Länge eingreifen. Die Schenkel liegen hierbei zur definierten Positionierung einerseits an der Seitenfläche des Magneten in Umfangsrichtung und auf der gegenüberliegenden Seite an der seitlichen Innenfläche der Sicke an. Der Bügel, der die beiden geraden Schenkel verbindet, weist dann Radialkomponenten auf, die die beiden randseitigen Sicken des Folgepols übergreift, indem sich der Bügel radial von den Sicken nach Innen erstreckt.

Das Gehäuse ist vorteilhaft als Poltopf ausgebildet, das an einer Seite einen - bevorzugt einteilig mit dem Poltopf ausgebildeten - Boden aufweist, der insbesondere eine Lageraufnahme für ein Rotorlager aufweist. Die gegenüberliegende offene Poltopfseite weist einen Flansch auf, der nach dem Zusammenbau an einem korrespondierenden Gegenflansch eines weiteren Gehäuseteils anliegt. Damit der radial nach innen stehende Bügel nicht mit dem Rotor kollidiert, ist der Bügel axial zwischen dem Rotor und dem Gehäuseboden angeordnet, wobei er insbesondere zur eindeutigen Positionierung axial am Gehäuseboden anliegt.

Unmittelbar benachbart zum Flansch ist am Polgehäuse ein Aufnahmebereich ausgebildet. Dieser kann vorteilhaft ein Bürstenhalter-Bauteil aufnehmen, das sich axial über die Schnittstelle des Flansches in das benachbarte Gehäuseteil erstreckt. Am Flansch sind beispielsweise Löcher als Aufnahmen für Verbindungselemente - bevorzugt Schrauben oder Nieten - zu einem Getriebegehäuse ausgebildet.

Durch das erfindungsgemäße Herstellungsverfahren des Polgehäuses werden mittels Tiefziehen in einem Arbeitsgang der Folgepolbereich mit den Sicken, der Haltebereich für die Magnete und der Aufnahmebereich mit dem Flansch kostengünstig und präzise ausgebildet. Dabei kann die Auslegung der konkreten Abmessungen bestimmter Komponenten und die Wandstärke bei minimalem Materialeinsatz durch die Auswahl des Tiefziehwerkzeugs realisiert werden. Die 3-dimensionale Haltefeder kann nach dem Einsetzen der Magnete gemäß dem Standard-Montageprozess üblicher Magnethaltefedern eingesetzt werden, wobei die Schenkel vorteilhaft durch die Anlage an den Seitenflächen der Magnete und an den seitlichen Innenflächen der Folgepole auf einfache Weise exakt zu positionieren sind. Der Bügel der Magnethaltefeder verläuft dabei am Gehäuseboden radial innerhalb der Ebene zwischen den beiden Schenkeln, ohne dass der Bügel axial an dem Rotor anliegt. Die axiale Montage des Rotors und des Bürstenhalter-Bauteils in das Polgehäuse ermöglicht eine eindeutig vorgebbare Flansch-Schnittsstelle, die sich besonders günstig für einen modularen Baukasten zur Kombination verschiedener Polgehäuse und Getriebegehäuse eignet.

Das Federhalteelement kann optional auch in Kombination mit dem Einkleben der Permanentmagnete verwendet werden, um diese während des Klebevorgangs zuverlässig zu fixieren.

### Kurze Beschreibung der Zeichnungen

Ausführungen der Erfindung sind in den Zeichnungen dargestellt und in der nachfolgenden Beschreibung näher erläutert.

Es zeigen
Figur 1: ein Ausführungsbeispiel einer erfindungsgemäßen elektrischen Maschine
Figur 2: einen Querschnitt der Figur 1
Figur 3: ein Ausführungsbeispiel einer erfindungsgemäßen Magnethaltefeder
Figur 4: ein weiteres Ausführungsbeispiel einer erfindungsgemäßen Magnethaltefeder
Figur 5: die Magnethaltefeder gemäß Figur 3 im ins Gehäuse eingebautem Zustand
Figur 6: schematische Einbau-Anordnung der Magnethaltefeder gemäß Fig. 4
Figur 7: das erfindungsgemäße Montagekonzept der Getriebe-Antriebseinheit.

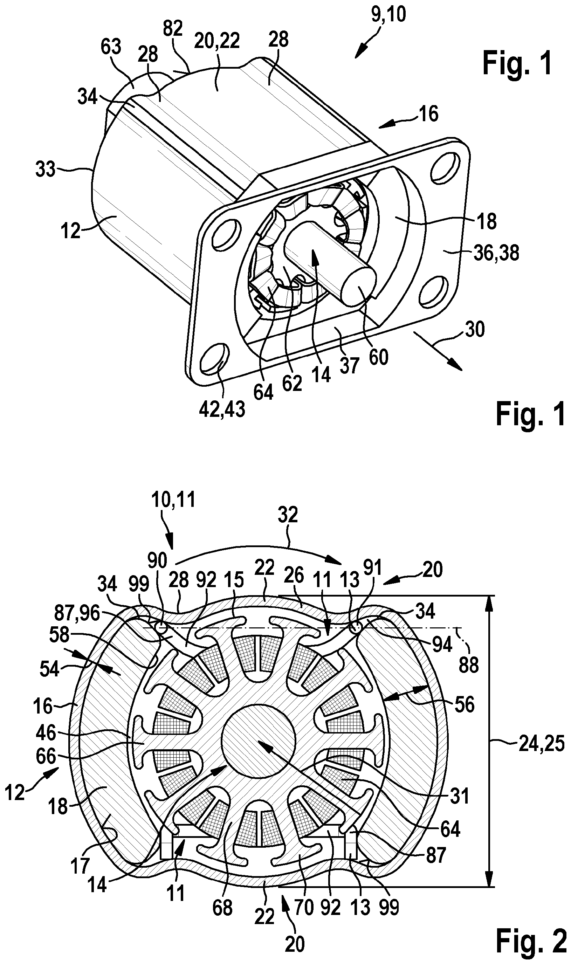

In Figur 1 ist eine erfindungsgemäße elektrische Maschine 10 dargestellt, die als Elektromotor 11 ausgebildet ist. Der Elektromotor 11 ist beispielsweise Bestandteil einer Getriebe-Antriebseinheit 100, wie sie zum Verstellen eines Schiebedachs, einer Scheibe oder eines Sitzteils im Kraftfahrzeug verwendet wird. Die elektrische Maschine10 weist einen Stator 12 auf, bei dem zwei Permanentmagnete 18 in einem als Polgehäuse 16 ausgebildeten Gehäuse 16 gegenüberliegend angeordnet sind. Zwischen den beiden sich gegenüberliegenden Permanentmagneten 18 sind zwei sich gegenüberliegende Folgepole 22 angeordnet, die durch die Gehäusewand 26 des Polgehäuses 16 gebildet werden. Hierzu sind in abgeflachten Bereichen 20 des Polgehäuses 16 jeweils zwei Sicken 28 ausgebildet, die sich in Axialrichtung 30 erstrecken - vorzugsweise bis zu einem Gehäuseboden 82 des Gehäuses 16. In Umfangsrichtung 32 ist zwischen den beiden Sicken 28 der Folgepol 22 als gewölbte Polgehäusewand 26 ausgebildet, die zusammen mit den Sicken 28 und einem seitlichen Haltebereich 34 für die Permanentmagnete 18 den abgeflachten Bereich 20 des Polgehäuses 16 bildet. Das Polgehäuse 16 weist eine axial offene Seite 36 auf, an der ein Flansch 38 zur Verbindung mit einem weiteren Gehäuseteil 40 ausgebildet ist. Der Flansch 38 weist Aufnahmen 42 für Verbindungselemente auf, die beispielsweise als Bohrungen 43 ausgebildet sind. Durch diese Bohrungen 43 können als Verbindungselemente bevorzugt Schrauben in einen korrespondierenden Gegenflansch 44 geschraubt werden. In den Stator 12 ist in Figur 1 ein Rotor 14 eingefügt, wobei ein kleiner radialer Luftspalt 46 zu den den Rotor 14 umgebenden Permanentmagneten 18 und Folgepolen 22 ausgebildet ist.

In Figur 2 ist ein Schnitt quer zur Axialrichtung 30 durch den Stator12 und den Rotor 14 der Figur 1 dargestellt. Die Permanentmagnete 18 liegen an der Innenwand 17 des Polgehäuses 16 an und sind mittels Magnethaltefedern 11 im Polgehäuse 16 fixiert. Die beiden Permanentmagnete 18 sind in Radialrichtung 31 gleichsinnig magnetisiert, so dass beide beispielsweise an ihrer radialen Innenseite einen Südpol bilden. Über das Polgehäuse 16, das einen magnetischen Rückschluss bildet, wird ein magnetischer Kreis zu den Folgepolen 22 erzeugt, die dann beispielsweise an der Innenwand 17 des Polgehäuses 16 jeweils einen Nordpol bilden. Da im Bereich der Folgepole 22 keine Permanentmagnete 18 angeordnet sind, ist die maximale Abmessung 25 des Polgehäuses 16 zwischen den abgeflachten Bereichen 20 deutlich geringer, als in Richtung der beiden Permanentmagneten 18. Die maximale Abmessung 25 stellt eine Schlüsselweite 24 für den zur Verfügung stehenden Einbauraum dar, der optimal an die entsprechende Anwendung, insbesondere an die Einbauposition im Kraftfahrzeug, angepasst wird. In Figur 2 ist die maximale radiale Abmessung 25 an den gewölbten Bereichen der Folgepole 22 in Umfangsrichtung 32 zwischen den Sicken 28 ausgebildet. Die Wandstärke 54 des Polgehäuses 16 wird bezüglich des Gewichts, des magnetischen Fluss und der Geräuschminimierung optimiert. Da das Polgehäuse 16 als Tiefziehteil hergestellt wird, ist die Wandstärke 54 über den gesamten Umfang relativ konstant. Die Permanentmagnete 18 weisen eine so genannte Polabhebung 58 auf, so dass sich der Luftspalt 46 zwischen dem Rotor 14 und dem Permanentmagneten 18 in Umfangsrichtung 32 aufweitet. Der Rotor 14 weist eine Rotorwelle 60 auf, auf der ein Ankerpaket 62 zur Aufnahme von elektrischen Wicklungen 64 angeordnet ist. Hierzu weist das Ankerpaket 64 Rotorzähne 66 auf, die aus radialen Zahnschäften 68 gebildet sind, die von radial äußeren Zahnköpfen 70 abgeschlossen werden. Die elektrischen Wicklungen 64 sind radial innerhalb der Zahnköpfe 70 auf die Zahnschäfte 68 gewickelt. Die Permanentmagnete 18 weisen in Umfangsrichtung 32 Seitenflächen 99 auf, an denen zwei freie Schenkel 90, 91 der Magnethaltefeder 11 anliegen. Die freien Schenkel 90, 91 sind an ihren nicht freien Enden mittels eines Bügels 92 miteinander verbunden, so dass die Magnethaltefeder 11 zwischen den Permanentmagneten 18 eine quer zur Axialrichtung 30 wirkende Anpresskraft erzeugt. Der Bügel 92 ragt aus einer Ebene 88, die die beiden Schenkel 90, 91 aufspannen heraus und ist radial ins Gehäuseinnere zur Rotorwelle 60 hin ausgeformt. In der oberen Bildhälfte weist die Magnethaltefeder 11 einen runden Querschnitt 13 auf, und der Bügel 92 ist gewölbt oder bogenförmig ausgebildet. Dabei weist der Bügel 92 in den Übergangsabschnitten 87 zu den Schenkeln 90,91 eine Radialkomponente 96 auf, die radial von den Sicken 28 weg weist, so dass der Bügel 92 durch das Innere des Gehäuses16 verläuft und mit dem Rotor14 überlappt. Dabei verläuft der Bügel 92 axial zwischen dem Rotor 14 und dem Gehäuseboden 82 In der unteren Bildhälfte der Fig. 2 weist die Magnethaltefeder 11 einen eckigen, insbesondere rechteckigen oder quadratischen Querschnitt 13 auf. Hier ist der Bügel 92 quer zur Axialrichtung 30 näherungsweise eckig geformt, so dass der Bügel 92 einen geraden Abschnitt 84 aufweist, der näherungsweise parallel zur Ebene 88 angeordnet ist. Dabei weisen die Übergangsabschnitte 87 näherungsweise senkrecht weg von der Ebene88.

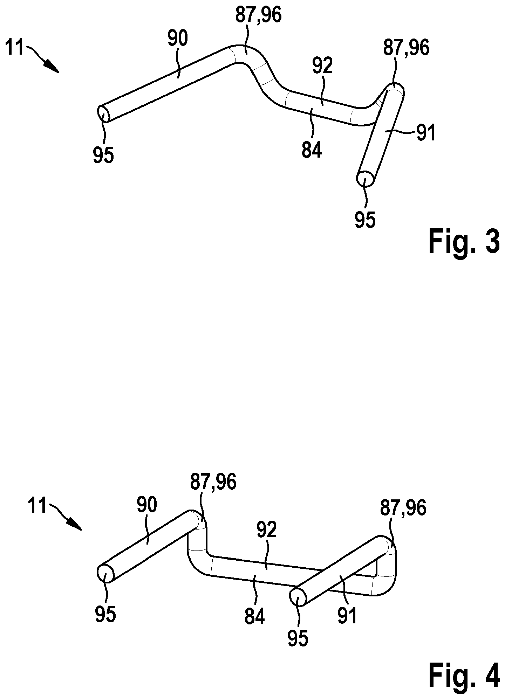

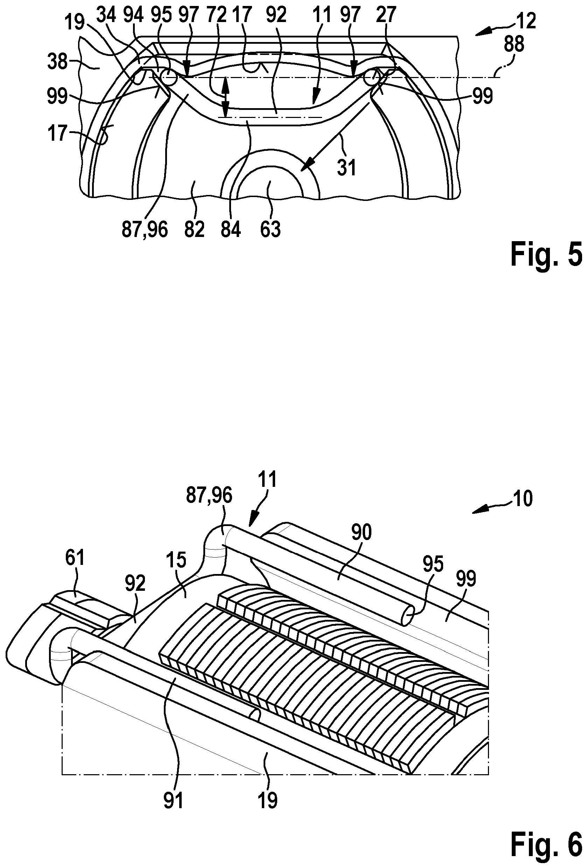

In Figur 3 ist eine erfindungsgemäße Magnethaltefeder 11 vor dem Einbau in die elektrische Maschine 10 dargestellt. Die beiden Schenkel 90, 91 sind gerade ausgebildet und weisen freie Enden 95 auf. An den gegenüberliegenden Enden sind die Schenkel 90, 91 mittels des Bügels 92 miteinander verbunden. Die beiden Schenkel 90, 91 bilden eine Ebene 88 , wobei der Bügel 92 außerhalb diese Ebene 88 angeordnet ist. Dadurch ist die Magnethaltefeder 11 3-dimensional ausgebildet. Der Bügel 92 weist hier einen geraden Abschnitt 84 auf, der etwa parallel zur Ebene 88 verläuft. Die Übergangsabschnitte 87 zu den Schenkeln 90, 91 hin sind gebogen ausgebildet. In diesem Ausführungsbeispiel sind die beiden Schenkel 90, 91 mit einem Winkel zueinander innerhalb der Ebene 88 angeordnet, der beispielsweise etwa 30° beträgt. Beim Einbau in das Gehäuse 16 - wie dies in Fig. 5 dargestellt ist - wird die Magnethaltefeder 11 dann elastisch umgeformt, so dass die Schenkel 90, 91 dann an den Seitenflächen 99 anliegen und näherungsweise parallel zueinander ausgerichtet sind.

In Figur 4 ist ein weiteres Ausführungsbeispiel einer erfindungsgemäßen Magnethaltefeder 11 dargestellt, bei der die beiden Schenkel 90, 91 nach dem Einbau näherungsweise parallel zueinander ausgerichtet sind. Der Bügel 92 ragt wieder aus der Ebene 88 heraus, wobei der Bügel 92 - entsprechend Fig. 2 untere Bildhälfte - quer zur Ebene 88 eckig ausgebildet ist. Der gerade Abschnitt 84 des Bügels 92 weist einen Abstand 72 zur Ebene 88 auf, der auf jeden Fall größer ist, als die nach innen gerichtete Höhe der Sicke 28. Beim Einbau werden bei dieser Ausführung insbesondere die Übergangsabschnitte 87 elastisch verformt, so dass die beiden Schenkel 90, 91 quer zur Axialrichtung 30 auseinander gepresst werden, wie dies in Fig. 6 dargestellt ist.

Figur 5 zeigt eine Draufsicht auf die offene Seite 36 des Stators 12, bei dem die Permanentmagnete 18 mittels Magnethaltefedern 11 gemäß Fig. 3 im Polgehäuse 16 gehalten werden. Die Magnethaltefeder 11 weist zwei gegenüberliegende freie Schenkel 90, 91 auf, die über den Bügel 92 miteinander verbunden sind. Die freien Schenkel 90, 91 liegen an den gegenüberliegenden Permanentmagneten 18 an und drücken diese zu deren Fixierung gegen die Innenwand 17 des Polgehäuses 16.

Zwischen der in Umfangsrichtung 32 weisenden Seitenfläche 99 des Permanentmagneten 18 und einer gegenüberliegenden seitlichen Fläche 27 der Sicke 28 ist ein Hohlraum 94 ausgeformt, in den der Schenkel 90, 91 hinein ragt. Dabei liegen bevorzugt die freien Enden 95 der Schenkel 90, 91 sowohl an der Seitenfläche 99, als auch an der seitlichen Fläche 27 der Sicke 28 an. Dabei ist insbesondere der Hohlraum 94 in radialer Richtung 31 keilförmig ausgebildet. Die Anlagefläche der Schenkel 90, 91 an den Permanentmagneten 18 liegt in diesem Ausführungsbeispiel innerhalb der radial inneren Hälfte der radialen Wandstärke 56 der Permanentmagnete 18. Der Querschnitt 13 der Schenkel 90, 91 ist beispielsweise rund ausgebildet, kann aber auch halbrund, abgeflacht, oder als Flachprofil oder Mehrkantprofil ausgebildet sein, und/oder auch eine strukturierte Oberfläche aufweisen, die besser an der Seitefläche 99 haftet. Ebenfalls kann an der Seitenfläche 99 eine Struktur, beispielsweise eine Kerbe in Axialrichtung 30, ausgebildet sein, in die die Schenkel 90, 91 eingreifen. Die Kontur der Seitenfläche 99 kann dabei entsprechend angepasst sein, beispielsweise ganz oder teilweise einen Winkel zur Radialrichtung 31 bilden. Des Weiteren kann die äußere oder innere Magnetkante des Permanentmagnete18 entsprechend abgeschrägt sein oder eine Fase 19 aufweisen. Die beiden benachbarten Sicken 28 bilden jeweils Innenkanten 97, die von dem Bügel 92, der die beiden Schenkel 90, 91 über die Innenkanten 97 hinweg verbindet, überbrückt werden. Dadurch wird verhindert, dass die Magnethaltefeder 11 an der Innenkante 97 der Sicke 28, die einen Kipp-Punkt für eine herkömmliche Magnethaltefeder bilden würde, aus der Axialrichtung 30 radial nach innen verkippt. Dazu weist der Bügel 92 Radialkomponenten 96 auf, die radial von den Innenkanten 97 weg, durch das Innere des Gehäuses 16 führen. In Fig. 5 liegt der Bügel 92 axial an der Innenseite des Gehäusebodens 82 an, der dann einen axialen Anschlag für die Magnethaltefeder 11 bildet. Zwischen den beiden Permanentmagneten 18 sind zwei Magnethaltefedern 11 eingespannt (nicht dargestellt), deren Schenkel 90, 91 näherungsweise in einer Ebene 88 liegen mit den abgeflachten Bereichen 20 des Polgehäuses16.

In Figur 6 ist die Magnethaltefeder 11 gemäß Fig. 4 im eingebauten Zustand schematisch ohne Gehäuse dargestellt. Der Bügel 92, der hier wieder einen geraden Abschnitt 84 aufweist, ist axial zwischen dem Rotor 14 und dem nicht dargestellten Gehäuseboden 82 angeordnet. Dabei überschneidet sich der Bügel 92 mit dem Rotor 14, so dass der Bügel 92 radial innerhalb der Umfangsfläche 15 des Rotors 14 angeordnet ist. Auf der Rotorwelle 60 ist ein Rotorlager 61 angeordnet, das in eine Lageraufnahme 63 im Gehäuseboden 82 eingefügt wird. Die Schenkel 90, 91 erstrecken sich bevorzugt über mindesten der Hälfte der axialen Ausdehnung der Permanentmagnete 18, wodurch diese über ihre gesamte axiale Ausdehnung zuverlässig an das Gehäuse 16 gedrückt werden.

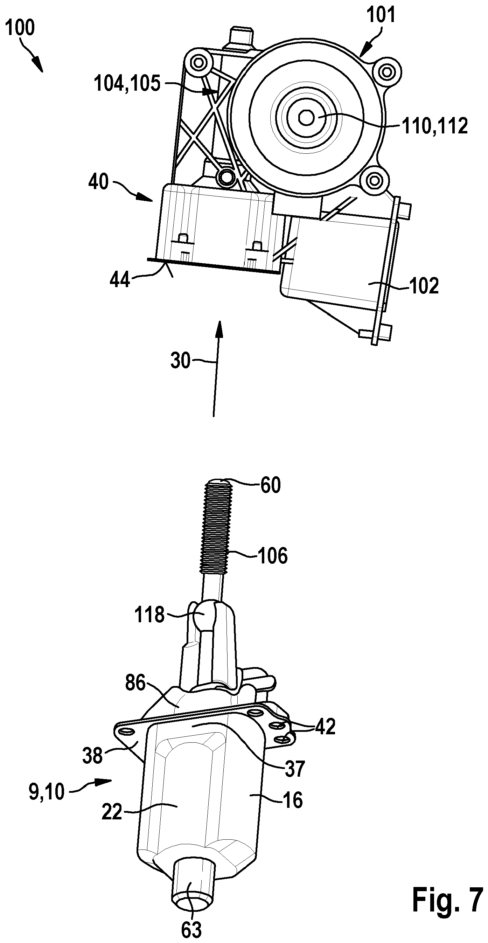

Beim Herstellungsverfahren der elektrischen Maschine10 wird das Polgehäuse 16 als Poltopf mit dem Flansch 38 und dem Aufnahmebereich 37 als definierte Schnittstelle mittels Tiefziehen gefertigt, wobei die Sicken 28 mit in einem Arbeitsgang angeformt werden. Danach werden die Permanentmagnete 18 in das Polgehäuse 16 eingesetzt, wobei diese optional an dessen Innenwand 17 angeklebt werden können. Zur Fixierung der Permanentmagnete 18 werden zwei Magnethaltefedern 11 in das Polgehäuse 16 eingeführt, derart, dass die Schenkel 90, 91 an den Seitenflächen 99 der Permanentmagnete 18 anliegen, und diese gegen die Innenwand 17 des Polgehäuses 16 pressen. Dabei wird der Bügel 92 beabstandet von der Ebene 88 der beiden Schenkel 90, 91, radial innerhalb dieser angeordnet, damit die Magnethaltefedern 11, die Innenkanten 97 der Sicken 28 nicht berühren. Nach der Fixierung der Permanentmagnete 18 wird der Rotor 14 und ein Bürstenträger-Bauteil 86 axial in das Polgehäuse 16 eingefügt, so das das Bürstenträger-Bauteil 86 im Aufnahmebereich 37 angeordnet ist und axial über den Flansch 38 hinaus ragt. Danach wird ein weiteres Gehäuseteil 40, das als Getriebegehäuse 101 ausgebildet ist, axial über die Rotorwelle 60 auf das Bürstenträger-Bauteil 86 aufgesetzt, bis der Flansch 38 am Gegenflansch 44 des Gehäuseteils 40 anliegt. Dann werden Verbindungselemente - bevorzugt Schrauben - in die Aufnahmen 42 des Flanschs 38 eingefügt und mit dem Gehäuseteil 40 verbunden. Dieses Montageverfahren ist in Figur 7 dargestellt, bei dem die Rotorwelle 60 ein Schnecke 106 aufweist und mittels eines Gleitlagers 118 - insbesondere eines Kalottenlagers - im Bürstenhalter-Bauteil 86 gelagert ist.

In Figur 7 ist eine fertig montierte Getriebe-Antriebseinheit 100 dargestellt, die als elektrische Maschine 10 einen Elektromotor 9 mit Folgepolen 22 aufweist, der in einem Gehäuseteil 40 angeflanscht ist, das als Getriebegehäuses 101 ausgebildet ist, in dem ein Getriebe 104 angeordnet ist. Das Getriebe 104 ist beispielsweise als Schneckengetriebe 105 ausgebildet, bei dem die auf der Rotorwelle 60 des Elektromotors 9 angeordnete Schnecke 106 mit einem im Getriebegehäuse 101 gelagerten Schneckenrad kämmt. Vom Schneckenrad wird das Antriebsmoment des Elektromotors 9 an ein Abtriebselement 110 - insbesondere ein Abtriebsritzel 112 - weitergeleitet, das beispielsweise das zu verstellende Teil - insbesondere im Kraftfahrzeug - antreibt. Das Polgehäuse 16 des Elektromotors 9 ist aus Metall hergestellt und dient als magnetischer Rückschluss. Das Getriebegehäuse 101 ist im Ausführungsbeispiel aus Kunststoff hergestellt, insbesondere mittels Spritzguss-Verfahren. Das Gehäuseteil 40 weist ein Elektronikgehäuse 102 zur Aufnahme einer Elektronikeinheit auf und ist als integraler Bestandteil des Getriebegehäuses 101 ausgebildet.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die konkrete Ausformung der 3-dimensionalen Magnethaltefeder 11, insbesondere die Übergangsabschnitte 87 zwischen den Schenkeln 90, 91 und dem Bügel 92 variiert und den geometrischen Platz-Verhältnissen des Gehäuses 16 angepasst werden. Dabei kann beispielsweise die axiale Länge der beiden Schenkel 90, 91 auch unterschiedlich lang ausgebildet sein, oder die Schenkel 90, 91 können einen unterschiedlichen Winkel zur Axialachse aufweisen. Anstelle der Sicken 28 kann die Folgepolkontur auch auf andere Weise ausgebildet werden, wobei der Bügel 92 dann die beiden Randbereiche der Folgepolkontur radial nach innen überbrückt. Die elektrische Maschine 10 findet vorzugsweise Anwendung für Stellantriebe im Kraftfahrzeug, beispielsweise zur Verstellung von Sitzteilen, Fensterscheiben Schiebedächern und Abdeckungen von Öffnungen, ist jedoch nicht auf solche Anwendungen beschränkt.

## Patentansprüche

1. Elektrische Maschine (10), insbesondere zum motorischen Verstellen beweglicher Teile im Kraftfahrzeug, mit einem Gehäuse (16), in dem mindestens zwei Permanentmagnete (18) angeordnet sind, wobei in dem Gehäuse (16) ein Rotor (14) mit einer näherungsweise zylindrischen Umfangsfläche (15) angeordnet ist, wobei das Gehäuse (16) einen magnetischen Rückschluss bildet, und das Gehäuse (16) zwischen den in Radialrichtung (31) gleichsinnig magnetisierten Permanentmagneten (18) abgeflachte Bereiche (20) aufweist, an denen die Gehäusewand (26) einander gegenüberliegende magnetische Folgepole (22) ausbildet, und jeder der abgeflachten Bereiche (20) des Gehäuses (16) zwei etwa parallel in Axialrichtung (30) verlaufenden Sicken (28) aufweist, die eine Innenkontur der Folgepole (22) und einen Übergang zu Haltebereichen (34) der Permanentmagnete (18) bilden,
**dadurch gekennzeichnet, dass** die mindestens zwei Permanentmagnete (18) mit mindestens einer Magnethaltefeder (11) im Gehäuse (16) befestigt sind, wobei die Magnethaltefeder (11) einen ersten Schenkel (90) und einen zweiten Schenkel (91) aufweist, die mittels eines Bügels (92) miteinander verbunden sind, und der erste und der zweite Schenkel (90, 91) eine Ebene (88) im Raum aufspannen, wobei der Bügel (92) aus der aufgespannten Ebene (88) heraus ragt, und die beiden Schenkel (90, 91) jeweils an zwei bezüglich der Umfangsrichtung (32) des Gehäuses (16) gegenüberliegenden Seitenflächen (99) der Permanentmagneten (18) anliegen, und der Bügel (92) bezüglich der Radialrichtung (31) mit dem Rotor (14) überlappt, wobei die Magnethaltefeder (11) als einstückiges Biegeteil aus Federstahl gefertigt ist,

2. Elektrische Maschine (10) nach Anspruch 1, **dadurch gekennzeichnet, dass** der Bügel (92) zumindest teilweise radial innerhalb der Umfangsfläche (15) angeordnet ist.

3. Elektrische Maschine (10) nach einem der vorhergehenden Ansprüche, **dadurch gekennzeichnet, dass** die mindestens zwei Permanentmagnete (18) mittels einer von der Magnethaltefeder (11) erzeugten Federkraft gegen eine Gehäuseinnenwand (17) des Gehäuses (16) gepresst werden.

4. Elektrische Maschine (10) nach einem der vorhergehenden Ansprüche, **dadurch gekennzeichnet, dass** der Rotor (14) als ein elektrische Wicklungen (64) aufnehmender Rotor (14) ausgebildet ist.

5. Elektrische Maschine (10) nach einem der vorhergehenden Ansprüche, **dadurch gekennzeichnet, dass**, die Schenkel (90, 91) bezüglich der Umfangsrichtung (32) zwischen den Sicken (28) und den Permanentmagneten (18) angeordnet sind.

6. Elektrische Maschine (10) nach einem der vorhergehenden Ansprüche, **dadurch gekennzeichnet, dass** in Umgangsrichtung (32) zwischen den Seitenflächen (99) der Permanentmagnete (18) und den Sicken (28) ein Hohlraum (94) ausgebildet ist, in den die Schenkel (90, 91) radial eingreifen und sich in Axialrichtung (30) erstrecken, und der Bügel (92) in Umfangsrichtung (32) die beiden Sicken (28) eines Folgepols (22) radial nach Innen übergreift, wobei insbesondere Übergangsbereiche (87) zwischen den Schenkeln (90, 91) und dem Bügel (92) eine Radialkomponente (96) aufweisen, die vom Hohlraum (94) weg radial nach innen weist.

7. Elektrische Maschine (10) nach einem der vorhergehenden Ansprüche, **dadurch gekennzeichnet, dass** an einem axialen Ende des Gehäuses (16) ein Gehäuseboden (82) - vorzugsweise einstückig mit diesem - ausgebildet ist, und der Bügel (92) axial zwischen dem Rotor (14) und dem Gehäuseboden (82) angeordnet ist, und insbesondere axial am Gehäuseboden (82) anliegt.

8. Elektrische Maschine (10) nach einem der vorhergehenden Ansprüche, **dadurch gekennzeichnet, dass** der Bügel (92) quer zu der Ebene (88) gewölbt und bogenförmig zwischen den beiden Schenkeln (90, 91) ausgebildet ist.

9. Elektrische Maschine (10) nach einem der vorhergehenden Ansprüche, **dadurch gekennzeichnet, dass** der Bügel (92) einen geraden Abschnitt (84) aufweist, der näherungsweise parallel zur Ebene (88) ausgebildet ist, und beabstandet zu dieser Ebene (88) angeordnet ist.

10. Elektrische Maschine (10) nach einem der vorhergehenden Ansprüche, **dadurch gekennzeichnet, dass** die Magnethaltefeder (11) aus Edelstahl gefertigt ist.

11. Elektrische Maschine (10) nach einem der vorhergehenden Ansprüche, **dadurch gekennzeichnet, dass** die Schenkel (90, 91) und der Bügel (92) einen runden Querschnitt (13) aufweisen.

12. Elektrische Maschine (10) nach einem der vorhergehenden Ansprüche, **dadurch gekennzeichnet, dass** die beiden Schenkel (90, 91) näherungsweise gradlinig ausgebildet sind und unter einem Winkel zueinander angeordnet sind, der 5° bis 40° beträgt.

13. Verfahren zum Herstellen einer elektrischen Maschine (10) - insbesondere ein Stellantrieb im Kraftfahrzeug - nach einem der vorhergehenden Ansprüche, mit den folgenden Verfahrensschritten:
- Ausbilden eines metallischen Polgehäuses (16) mittels Tiefziehen, wobei zur Ausbildung von Folgepolen (22) axiale Sicken (28) und sich in Umfangsrichtung daran anschließende Haltebereiche (34) für Permanentmagnete (18) ausgebildet werden
- Einsetzen der Permanentmagnete (18) in die Haltebereiche (34), - optional mittels Verwendung von Klebstoff - wobei insbesondere die Permanentmagnete (18) bezüglich der Radialrichtung (31) gleichsinnig magnetisiert werden
- Einfügen von Magnethaltefedern (11) derart, dass die freien Enden (95) der Schenkel (90, 91) in Umfangsrichtung (32) an den Seitenflächen (99) der Permanentmagnete (18) anliegen, und der Bügel (92) aus einer Ebene (88), die die beiden Schenkel (90, 91) aufspannen, radial nach innen ausgeformt ist
- Axiales Einsetzen des Rotors (14) mit einem eine Rotorwelle (60) umschließenden Bürstenhalter-Bauteil (86) in das Gehäuse (16), wobei insbesondere anschließend ein Getriebegehäuseteil (101) axial an das Bürstenträger-Bauteil (86) gefügt wird, und mit einem Gegenflansch (44) an einem Flansch (38) des Gehäuses (16) befestigt wird
- wobei in dem Gehäuse (16) der Rotor (14) eine näherungsweise zylindrische Umfangsfläche (15) aufweist, und der Bügel (92) bezüglich der Radialrichtung (31) mit dem Rotor (14) überlappt.

## Claims

1. Electrical machine (10), in particular for motorized adjustment of moving parts in motor vehicles, having a housing (16) in which at least two permanent magnets (18) are arranged, wherein a rotor (14) having an approximately cylindrical circumferential surface (15) is arranged in the housing (16), wherein the housing (16) forms a magnetic return path, and the housing (16) has flattened regions (20) between the permanent magnets (18) which are magnetized in the same sense in the radial direction (31), the housing wall (26) forming mutually opposite magnetic consequent poles (22) on said regions, and each of the flattened regions (20) of the housing (16) having two beads (28) which run approximately parallel in the axial direction (30) and which form an inner contour of the consequent poles (22) and a transition to retaining regions (34) of the permanent magnets (18),
**characterized in that** the at least two permanent magnets (18) are fastened in the housing (16) by at least one magnet-retaining spring (11), wherein the magnet-retaining spring (11) has a first limb (90) and a second limb (91), which limbs are connected to one another by means of a clip (92), and the first and the second limb (90, 91) span a plane (88) in space, wherein the clip (92) projects out of the spanned plane (88), and the two limbs (90, 91) respectively bear against two side faces (99) of the permanent magnets (18) which are situated opposite one another in relation to the circumferential direction (32) of the housing (16), and the clip (92) overlaps the rotor (14) in relation to the radial direction (31), wherein the magnet-retaining spring (11) is produced as an integral bent part which is composed of spring steel.

2. Electrical machine (10) according to Claim 1, **characterized in that** the clip (92) is arranged at least partially radially within the circumferential surface (15) .

3. Electrical machine (10) according to either of the preceding claims, **characterized in that** the at least two permanent magnets (18) are pressed against a housing inner wall (17) of the housing (16) by means of a spring force which is generated by the magnet-retaining spring (11) .

4. Electrical machine (10) according to one of the preceding claims, **characterized in that** the rotor (14) is designed as a rotor (14) which receives electrical windings (64).

5. Electrical machine (10) according to one of the preceding claims, **characterized in that** the limbs (90, 91) are arranged between the beads (28) and the permanent magnets (18) in relation to the circumferential direction (32) .

6. Electrical machine (10) according to one of the preceding claims, **characterized in that** a hollow space (94) is formed between the side faces (99) of the permanent magnets (18) and the beads (28) in the circumferential direction (32), the limbs (90, 91) engaging radially into said hollow space and extending in the axial direction (30), and the clip (92) extends radially inward over the two beads (28) of a consequent pole (22) in the circumferential direction (32), wherein, in particular, transition regions (87) between the limbs (90, 91) and the clip (92) have a radial component (96) which points radially inward away from the hollow space (94) .

7. Electrical machine (10) according to one of the preceding claims, **characterized in that** a housing base (82) is formed at an axial end of the housing (16), preferably integrally with said housing, and the clip (92) is arranged axially between the rotor (14) and the housing base (82), and bears, in particular, axially against the housing base (82).

8. Electrical machine (10) according to one of the preceding claims, **characterized in that** the clip (92) is formed in a curved manner and in the manner of an arc transverse to the plane (88) between the two limbs (90, 91) .

9. Electrical machine (10) according to one of the preceding claims, **characterized in that** the clip (92) has a straight section (84) which is formed approximately parallel to the plane (88) and is arranged at a distance from said plane (88).

10. Electrical machine (10) according to one of the preceding claims, **characterized in that** the magnet-retaining spring (11) is produced from stainless steel.

11. Electrical machine (10) according to one of the preceding claims, **characterized in that** the limbs (90, 91) and the clip (92) have a round cross section (13).

12. Electrical machine (10) according to one of the preceding claims, **characterized in that** the two limbs (90, 91) are formed approximately in a straight line and are arranged at an angle in relation to one another, said angle being 5° to 40°.

13. Method for producing an electrical machine (10) - in particular an actuating drive in motor vehicles - according to one of the preceding claims, comprising the following method steps:
- forming a metallic pole housing (16) by means of deep-drawing, wherein axial beads (28) and retaining regions (34), which adjoin said axial beads in the circumferential direction, for permanent magnets (18) are formed in order to form consequent poles (22),
- inserting the permanent magnets (18) into the retaining regions (34) - optionally by means of using adhesive -, wherein, in particular, the permanent magnets (18) are magnetized in the same sense in relation to the radial direction (31),
- inserting magnet-retaining springs (11) in such a way that the free ends (95) of the limbs (90, 91) bear against the side faces (99) of the permanent magnets (18) in the circumferential direction (32), and the clip (92) is formed radially inwardly from a plane (88) which is spanned by the two limbs (90, 91),
- axially inserting the rotor (14) together with a brush holder component (86), which surrounds a rotor shaft (60), into the housing (16), wherein a gear mechanism housing part (101) is in particular then axially joined to the brush holder component (86), and is fastened to a flange (38) of the housing (16) by way of a mating flange (44),
- wherein the rotor (14) has an approximately cylindrical circumferential surface (15) in the housing (16), and the clip (92) overlaps the rotor (14) in relation to the radial direction (31).

## Revendications

1. Machine électrique (10), en particulier servant au déplacement motorisé de parties mobiles dans un véhicule automobile, comportant une carcasse (16) dans laquelle au moins deux aimants permanents (18) sont disposés, un rotor (14) présentant une surface périphérique (15) approximativement cylindrique étant disposé dans la carcasse (16), la carcasse (16) formant une culasse magnétique, et la carcasse (16) comprenant des régions aplaties (20) entre les aimants permanents (18) magnétisés dans le même sens dans la direction radiale (31), régions au niveau desquelles la paroi de carcasse (26) réalise des pôles conséquents (22) opposés l'un à l'autre, et chacune des régions aplaties (20) de la carcasse (16) comprenant deux moulures (28) s'étendant approximativement parallèlement dans la direction axiale (30), lesquelles forment un contour intérieur des pôles conséquents (22) et une transition vers des régions de retenue (34) des aimants permanents (18),
**caractérisée en ce que** les au moins deux aimants permanents (18) sont fixés dans la carcasse (16) à l'aide d'au moins un ressort de retenue d'aimants (11), les ressorts de retenue d'aimants (11) comprenant une première branche (90) et une deuxième branche (91) qui sont reliées l'une à l'autre au moyen d'un étrier (92), et la première et la deuxième branche (90, 91) formant un plan (88) dans l'espace, l'étrier (92) dépassant du plan formé (88), et les deux branches (90, 91) s'appuyant respectivement contre deux surfaces latérales (99) des aimants permanents (18) opposées par rapport à la direction périphérique (32) de la carcasse (16), et l'étrier (92) chevauchant le rotor (14) par rapport à la direction radiale (31), le ressort de retenue d'aimants (11) étant fabriqué à partir d'acier à ressort sous forme de pièce pliée d'un seul tenant.

2. Machine électrique (10) selon la revendication 1, **caractérisée en ce que** l'étrier (92) est disposé au moins partiellement radialement à l'intérieur de la surface périphérique (15).

3. Machine électrique (10) selon l'une des revendications précédentes, **caractérisée en ce que** les au moins deux aimants permanents (18) sont pressés contre une paroi intérieure (17) de la carcasse (16) au moyen d'une force générée par le ressort de retenue d'aimants (11).

4. Machine électrique (10) selon l'une des revendications précédentes, **caractérisée en ce que** le rotor (14) est réalisé sous la forme d'un rotor (14) logeant des enroulements électriques (64).

5. Machine électrique (10) selon l'une des revendications précédentes, **caractérisée en ce que** les branches (90, 91) sont disposées entre les moulures (28) et les aimants permanents (18) par rapport à la direction périphérique (32).

6. Machine électrique (10) selon l'une des revendications précédentes, **caractérisée en ce qu'**une cavité (94) est réalisée dans la direction périphérique (32) entre les surfaces latérales (99) des aimants permanents (18) et les moulures (28), cavité dans laquelle les branches (90, 91) viennent en prise radialement et s'étendent dans la direction axiale (30), et l'étrier (92) recouvrant radialement vers l'intérieur les deux moulures (28) d'un pôle conséquent (22) dans la direction périphérique (32), des régions de transition (87) entre les branches (90, 91) et l'étrier (92) comprenant en particulier un composant radial (96) qui est orienté radialement vers l'extérieur à l'écart de la cavité (94).

7. Machine électrique (10) selon l'une des revendications précédentes, **caractérisée en ce qu'**un fond de carcasse (82) est réalisé à une extrémité axiale de la carcasse (16), de préférence d'un seul tenant avec celle-ci, et l'étrier (92) est disposé axialement entre le rotor (14) et le fond de carcasse (82), et s'appuie en particulier axialement contre le fond de carcasse (82).

8. Machine électrique (10) selon l'une des revendications précédentes, **caractérisée en ce que** l'étrier (92) est bombé transversalement par rapport au plan (88) et est réalisé de manière arquée entre les deux branches (90, 91).

9. Machine électrique (10) selon l'une des revendications précédentes, **caractérisée en ce que** l'étrier (92) comprend une partie rectiligne (84) qui est réalisée approximativement parallèlement au plan (88) et est disposée de manière espacée de ce plan (88).

10. Machine électrique (10) selon l'une des revendications précédentes, **caractérisée en ce que** le ressort de retenue d'aimants (11) est fabriqué à partir d'acier inoxydable.

11. Machine électrique (10) selon l'une des revendications précédentes, **caractérisée en ce que** les branches (90, 91) et l'étrier (92) présentent une section transversale circulaire (13).

12. Machine électrique (10) selon l'une des revendications précédentes, **caractérisée en ce que** les deux branches (90, 91) sont réalisées de manière approximativement rectiligne et sont disposées l'une par rapport à l'autre suivant un angle qui vaut de 5° à 40°.

13. Procédé de production d'une machine électrique (10), en particulier d'un mécanisme de commande dans le véhicule automobile, selon l'une des revendications précédentes, comportant les étapes de procédé suivantes :
- réalisation d'une carcasse polaire métallique (16) par emboutissage profond, des moulures axiales (28) et des régions de retenue (34), s'y raccordant dans la direction périphérique, pour des aimants permanents (18) étant réalisées pour la réalisation de pôles conséquents (22),
- insertion des aimants permanents (18) dans les régions de retenue (34), éventuellement en utilisant un adhésif, les aimants permanents (18) étant en particulier magnétisés dans le même sens par rapport à la direction radiale (31),
- introduction de ressorts de retenue d'aimants (11) de telle sorte que les extrémités libres (95) des branches (90, 91) s'appuient contre les surfaces latérales (99) des aimants permanents (18) dans la direction périphérique (32), et que l'étrier (92) soit formé radialement vers l'intérieur à partir d'un plan (88) que les deux branches (90, 91) forment,
- insertion axiale du rotor (14) avec un composant porte-balais (86) entourant un arbre de rotor (60) dans la carcasse (16), une partie de carter de transmission (101) étant en particulier assemblée ensuite axialement au composant porte-balais (86), et fixée à une bride (38) de la carcasse (16) par une contre-bride (44),
- le rotor (14) présentant une surface périphérique (15) approximativement cylindrique dans la carcasse (16), et l'étrier (92) chevauchant le rotor (14) par rapport à la direction radiale (31).
